# EUROPEAN PATENT APPLICATION

(11) **EP 4 761 315 A1**
(43) Date of publication of application: **17.06.2026**
(21) Application number: 23949207.7
(22) Date of filing: 17.08.2023
(51) Int. Cl.: H04W 12/47, H04W 12/50, H04W 12/06, H04W 4/40

(54) **METHOD AND APPARATUS FOR REGISTERING TERMINAL AS DIGITAL KEY OF VEHICLE**

(71) Applicant: Samsung Electronics Co., Ltd., Suwon-si, Gyeonggi-do 16677 (KR)
(72) Inventor: KIM, Taewoo, Suwon-si, Gyeonggi-do 16677 (KR); JUNG, Sooyeon, Suwon-si, Gyeonggi-do 16677 (KR)
(74) Representative: HGF
(86) International application number: PCT/KR2023/012187
(87) International publication number: WO 2025/037660

(57) **Abstract**

An operation method of a terminal for performing owner pairing with a vehicle in a wireless communication system, according to one embodiment of the present disclosure, comprises the steps of: using a first communication method to establish a connection required for the owner pairing with the vehicle; using the first communication method to receive, from the vehicle, a first message including information indicating a communication method for performing owner pairing; and performing mutual authentication with the vehicle on the basis of information indicating the communication method for performing owner pairing. Embodiments of the present disclosure can include various other embodiments.

## Description

### [Technical Field]

The disclosure relates to a method and a device for registering a terminal as a digital key of a vehicle and, more particularly, to a technology that proposes a method and a device for registering a terminal with a vehicle as a digital key of the vehicle by using near-field communication (NFC) and Bluetooth (BLE) communication, or by using only Bluetooth communication.

### [Background Art]

The Internet, which is a human centered connectivity network where humans generate and consume information, is now evolving to the Internet of things (IoT) where distributed entities, such as things, exchange and process information. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation. Recently, a sensor network, a machine-to-machine (M2M) communication, machine type communication (MTC), and so forth have been researched.

Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

As personalized electronic devices such as smartphones and tablet PCs are widely used, technologies for performing security, authentication, and the like using a digital key have been developed. As one approach to such a digital key technology, a technology in which a digital key is integrated into a mobile device, for example, a smartphone, by using a wireless communication technology such as near-field communication (NFC) has been developed. That is, a digitized virtual key, i.e., a digital key, is inserted into a mobile device, and a user of the mobile device may use the digital key to replace a physical key with the digital key for purposes such as door opening and closing, vehicle door opening and closing, control, and access. However, in the case of using a digital key, security and authentication are crucial, and thus there has arisen a need for a highly secure key registration method for key usage.

### [Detailed Description of the Invention]

### [Technical Problem]

The disclosure proposes a method and a device for registering a terminal as a car key by using near-field communication (NFC) and Bluetooth (BLE) communication, or by using only Bluetooth communication.

### [Technical Solution]

An operation method of a terminal for performing owner pairing with a vehicle in a wireless communication system according to an embodiment of the disclosure includes: establishing a connection required for owner pairing with the vehicle by using a first communication method; receiving, from the vehicle, a first message including information indicating a communication method for performing owner pairing, by using the first communication method; and performing mutual authentication with the vehicle, based on the information indicating the communication method for performing the owner pairing.

An operation method of a vehicle for performing owner pairing with a terminal in a wireless communication system according to an embodiment of the disclosure includes: establishing a connection required for owner pairing with the terminal by using a first communication method; transmitting, to the terminal, a first message including information indicating a communication method for performing owner pairing, by using the first communication method; and performing mutual authentication with the terminal, based on the information indicating the communication method for performing the owner pairing.

A terminal for performing owner pairing with a vehicle in a wireless communication system according to an embodiment of the disclosure includes: a transceiver; and at least one processor, wherein the at least one processor is configured to establish a connection required for owner pairing with the vehicle by using a first communication method, receive, from the vehicle, a first message including information indicating a communication method for performing owner pairing, by using the first communication method, and perform mutual authentication with the vehicle, based on the information indicating the communication method for performing the owner pairing.

A vehicle for performing owner pairing with a terminal in a wireless communication system according to an embodiment of the disclosure includes: a transceiver; and at least one processor, wherein the at least one processor is configured to establish a connection required for owner pairing with the terminal by using a first communication method, transmit, to the terminal, a first message including information indicating a communication method for performing owner pairing, by using the first communication method, and perform mutual authentication with the terminal, based on the information indicating the communication method for performing the owner pairing.

### [Advantageous Effects]

A terminal according to an embodiment of the disclosure can conveniently register the terminal as a car key by using both near-field communication (NFC) and Bluetooth (BLE) communication.

A terminal according to an embodiment of the disclosure can improve user convenience while providing high security reliability by using only Bluetooth (BLE) communication.

### [Brief Description of Drawings]

FIG. 1A illustrates an exemplary architecture of a user terminal.
FIG. 1B is a flowchart illustrating an owner pairing procedure for registering a terminal as a car key.
FIG. 2 is a flowchart illustrating a pairing procedure for registering a terminal as a car key by using only NFC.
Case (a) of FIG. 3 is a flowchart illustrating a pairing procedure using only NFC.
Case (b) of FIG. 3 is a flowchart illustrating a pairing procedure sequentially using NFC and BLE according to an embodiment of the disclosure.
FIGS. 4A and 4B are flowcharts illustrating a pairing procedure sequentially using NFC and BLE according to an embodiment of the disclosure.
FIG. 5 is a diagram illustrating a system key derivation operation of a pairing procedure sequentially using NFC and BLE according to an embodiment of the disclosure.
FIGS. 6A, 6B, and 6C are diagrams illustrating an owner pairing procedure of a pairing procedure sequentially using NFC and BLE according to an embodiment of the disclosure.
FIG. 7 is a diagram illustrating a BLE advertising message when establishing a BLE connection in a pairing procedure sequentially using NFC and BLE according to an embodiment of the disclosure.
FIG. 8 is a diagram illustrating a select command transmitted by a vehicle to an electronic device when establishing a BLE connection in a pairing procedure sequentially using NFC and BLE according to an embodiment of the disclosure.
FIG. 9 is a diagram illustrating a verification procedure for each user in a pairing procedure sequentially using NFC and BLE according to an embodiment of the disclosure.
Case (a) of FIG. 10 is a flowchart illustrating a pairing procedure using BLE and UWB.
Case (b) of FIG. 10 is a flowchart illustrating a pairing procedure sequentially using BLE and NFC according to an embodiment of the disclosure.
FIG. 11A is a flowchart illustrating a pairing procedure using BLE and UWB.
FIG. 11B is a flowchart illustrating a pairing procedure sequentially using BLE and NFC according to an embodiment of the disclosure.
FIG. 12 is a flowchart illustrating a pairing procedure sequentially using BLE and NFC according to an embodiment of the disclosure.
FIG. 13 is a diagram illustrating BLE advertisement data in a pairing procedure sequentially using BLE and NFC according to an embodiment of the disclosure.
FIG. 14 is a diagram illustrating a message transmitted by a terminal in a pairing procedure sequentially using BLE and NFC according to an embodiment of the disclosure.
Case (a) of FIG. 15 is a flowchart illustrating a pairing procedure using BLE and UWB.
Case (b) of FIG. 15 is a flowchart illustrating a pairing procedure using only BLE according to an embodiment of the disclosure.
FIG. 16 is a flowchart illustrating a pairing procedure using only BLE according to an embodiment of the disclosure.
FIG. 17 is a diagram illustrating BLE advertisement data in a pairing procedure using only BLE according to an embodiment of the disclosure.
FIG. 18 is a diagram illustrating a message transmitted by a terminal in a pairing procedure sequentially using BLE and NFC according to an embodiment of the disclosure.
FIGS. 19A and 19B are diagrams illustrating information on a pairing capability of a car according to an embodiment of the disclosure.
FIG. 20 is a flowchart illustrating an operation method of a terminal according to an embodiment of the disclosure.
FIG. 21 is a flowchart illustrating an operation method of a vehicle according to an embodiment of the disclosure.
FIG. 22 is a structural diagram illustrating a structure of an electronic device according to an embodiment of the disclosure.

### [Mode for Carrying out the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, according to some embodiments, the "unit" may include one or more processors.

As used herein, the term "terminal" or "device" may also be referred to as a mobile station (MS), a user equipment (UE), a user terminal (UT), a wireless terminal, an access terminal (AT), a terminal, a subscriber unit, a subscriber station (SS), a wireless device, a wireless communication device, a wireless transmit/receive unit (WTRU), a mobile node, a mobile, or other terms. Various examples of the terminal may include a cellular phone, a smartphone having a wireless communication function, a personal digital assistant (PDA) having a wireless communication function, a wireless modem, a portable computer having a wireless communication function, a photographing device such as a digital camera having a wireless communication function, a gaming device having a wireless communication function, a music storage and playback home appliance having a wireless communication function, an Internet hole appliance capable of wireless Internet access and browsing, and portable units or terminals having integrated combinations of these functions. Further, the terminal may include a machine to machine (M2M) terminal and a machine type communication (MTC) terminal/device, but is not limited thereto. As used herein, the terminal may also be referred to as an electronic device or simply as a device.

Hereinafter, the operation principle of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

Hereinafter, embodiments of the disclosure will be described in detail in conjunction with the accompanying drawings. In the following description of embodiments of the disclosure, a communication system using a UWB will be described by way of example, but the embodiments of the disclosure may be applied to other communication systems having similar technical backgrounds or characteristics. Examples thereof may include communication systems using Bluetooth or Zigbee. Therefore, based on determinations by those skilled in the art, the embodiments of the disclosure may also be applied to other communication systems through some modifications without significantly departing from the scope of the disclosure.

Also, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In general, wireless sensor network technology is largely classified into wireless local area network (WLAN) technology and wireless personal area network (WPAN) technology according to a recognition distance. In this case, a WLAN is a technology based on IEEE 802.11 and is a technology that enables connection to a backbone network within a radius of about 100 m. Further, a WPAN is a technology based on IEEE 802.15 and includes Bluetooth, ZigBee, ultra-wide band (UWB), and the like. A wireless network in which such wireless network technology is implemented may include a plurality of electronic devices.

According to the definition by the Federal Communications Commission (FCC), UWB may refer to a wireless communication technology that uses a bandwidth of 500 MHz or more or has a bandwidth corresponding to a center frequency of 20% or more. UWB may refer a band itself to which UWB communication is applied. UWB may enable secure and accurate ranging between devices. Thus, UWB enables relative position estimation based on the distance between two devices, or accurate position estimation of a device based on the distance from fixed devices (with known locations).

Specific terms used in the following description are provided to help understanding the disclosure, and the use of such specific terms may be changed into other forms without departing from the technical spirit of the disclosure.

A "digital key" refers to digital credentials used to authenticate access to a vehicle.

An "owner device" refers to a UE of a vehicle owner. In this disclosure, unless otherwise specified, a UE refers to an owner device.

A "friend device" refers to a UE which may communicate with the owner device through the same vehicle OEM server.

"Owner pairing (OP)" refers to a procedure in which an owner's UE is paired with a vehicle. NFC, BLE, or UWB communication may be used during owner pairing.

A "transaction operation" refers to an operation in which a UE exchanges service data with another UE.

An "applet" refers to a small program with a simple function written in the Java language, or a program which is included in a web page and performs a small function.

"Simplified password authenticated key exchange (SPAKE2+)" refers to a password-authenticated key exchange protocol executed between two parties. SPAKE2+ corresponds to an augmented PAKE protocol since only one party has knowledge of a password.

For convenience of description, the disclosure uses terms and names defined in digital key-related standards defined by the car connectivity consortium (CCC) among the currently existing communication standards. However, the disclosure is not limited by the terms and names, and may equally be applied to wireless communication networks following other standards.

In addition, in describing the disclosure, when it is determined that a detailed description of a related known function or configuration may unnecessarily obscure the subject matter of the disclosure, the detailed description thereof will be omitted.

Hereinafter, various embodiments of the disclosure will be described with reference to the accompanying drawings.

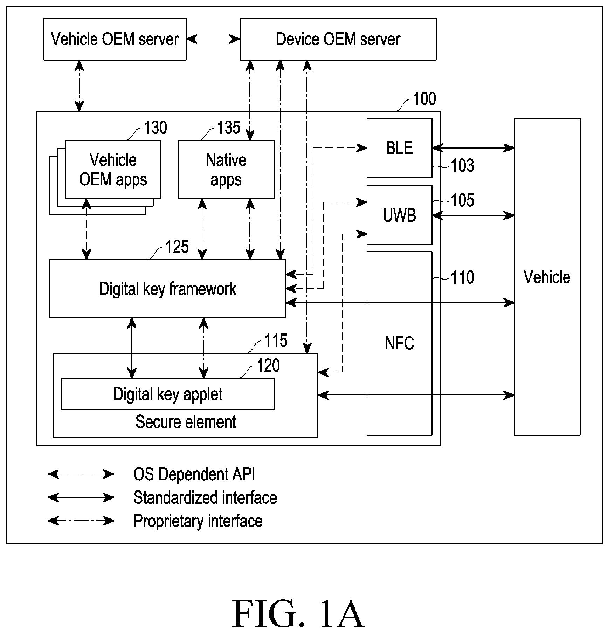

FIG. 1A illustrates an exemplary architecture of a UE.

In the disclosure, the UE may be one of various types of UEs. For example, the UE may be a portable device (e.g., a UE, a smartphone, a wearable device, or a tag device) or a stationary device (e.g., a door lock, an anchor device, or the like).

Referring to FIG. 1A, a UE 100 may include a BLE module 103, a UWB module 105, an NFC component 110, a secure element (or equivalent) 115, a digital key applet 120, a digital key framework 125, a vehicle OEM app 130, and a native app 135.

The Bluetooth (BLE) module 103 refers to an entity which manages Bluetooth communication between the UE and a vehicle. The BLE module 103 may be a part of at least one integrated circuit or a combo chip solution. The functions of the BLE module 103 are as follows.
- Communicating with a vehicle with respect to owner pairing, a transaction with another UE, and a digital key transaction (locking/unlocking, engine start, RKE, etc.)
- Communicating with the vehicle to configure secure ranging through UWB
- Communicating with the vehicle for a remote transaction, so as to enable a device to start an on-demand function (e.g., locking/unlocking, etc.)
- Communicating with the vehicle for notification transmission to notify a change in state information and transmit a signal
- Communicating with the vehicle for data transmission of a third-party vehicle original equipment manufacturer (OEM) application

The UWB module 105 refers to an entity which manages a UWB ranging session. The UWB module 105 may be a part of at least one integrated circuit or a combo chip solution. The functions of the BLE module 103 are as follows.
- Securely determining a distance between a device and a vehicle to support secure distance measurement for passive entry and passive engine start functions by communicating with the vehicle for secure ranging

The NFC component 110 refers to an entity which manages NFC communication of the UE with another UE or with a vehicle. The functions of the NFC component 110 are as follows.
- Operating in a card emulation mode required for a contactless transaction
- Operating in a host card emulation mode (card emulation mode) required for owner pair configuration

The secure element (or equivalent) 115 may be a module related to a security element within the UE, and may include the following functions.
- Support for Java Card (example) and global platform, and enabling the use of secure element (SE) root based on a controller authority security domain defined by global platform (GP)
- Global platform card specification modification and global platform contactless extension
- Support for standard symmetric and asymmetric cryptography
- Host digital key applet
- A function of distinguishing communication between a wired interface and a contactless interface

The digital key applet 120 refers to a small application which manages and controls a digital key within the UE. The digital key applet 120 provides the following services.
- Hosts digital keys (one applet instance provides a digital key function for all vehicle OEMs)
- Implementation related to (fast and standardized) transactions
- Support for personal information protection
- Storage of an immobilizer token when other data related to a vehicle, an offline proof, an access profile, and a digital key is required
- Identifying the authenticity of a vehicle
- Identifying a certificate chain of a friend public key

The digital key framework 125 refers to a module which performs owner pairing, digital key sharing, and management within the UE. The digital key framework 125 provides a common digital key service function through an OS-specific API set for a vehicle OEM app. The APIs are described in a developer documentation for each OS platform.

The vehicle OEM app 130 refers to a module related to an application provided by a vehicle manufacturer, and the main function of the app is inherently supported by the UE. The vehicle OEM app 130 may be optionally included. The main functions of the vehicle OEM App 130 are as follows.
- The same functions as a default app and a vehicle OEM-specific function may be supported
- Provision of vehicle OEM server and ID&V
- Searching for an owner pairing password
- Key management with non-standard access profiles

The native app 135 provides a device-native user interface (UI), such as digital key generation, termination and deletion of a digital key, and activation/deactivation of a digital key. The native app 135 displays a list of all issued owner and friend digital keys.

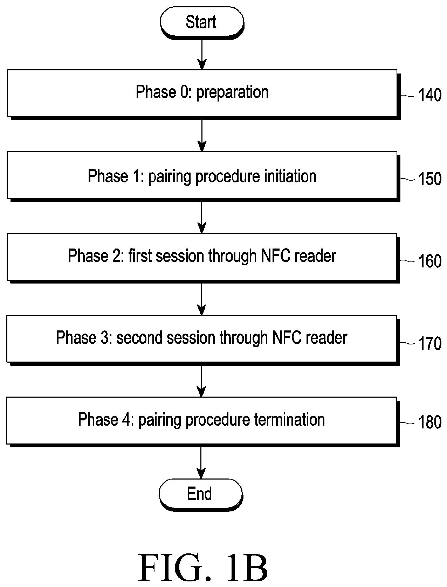

FIG. 1B is a flowchart illustrating an owner pairing procedure for registering a UE as a car key.

The owner pairing procedure illustrated in FIG. 1B may include an owner pairing procedure based on a CCC owner pairing protocol.

Referring to FIG. 1B, phase 0 is a preparation phase in which a UE may prepare a DK applet and store a UE certificate (140). Phase 1 is a pairing procedure initiation phase in which an owner pairing password issued by a vehicle manufacturer to a vehicle owner may be input to the UE (150).

Phase 2 is a first session through an NFC reader, in which after an owner pairing password is verified, the UE may generate a digital key and exchange a vehicle certificate and a digital key certificate (160). Phase 3 is a second session through an NFC reader, in which mutual authentication between the UE and the vehicle may be performed based on the certificates exchanged in phase 2 (170). Phase 4 (phase 3) is a step of terminating a pairing procedure, in which an immobilizer token required when performing an operation (action) such as "Engine start" (180) may be issued. In an embodiment, phase 4 (phase 3) may be optionally included.

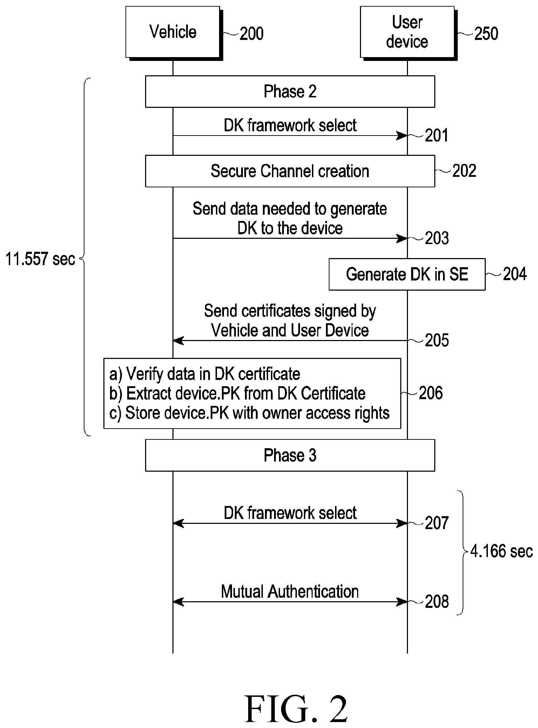

FIG. 2 is a flowchart illustrating an owner pairing procedure for registering a UE as a car key by using only NFC.

Specifically, FIG. 2 is a diagram illustrating phase 2 and phase 3 described in FIG. 1, and a UE 250 is an owner device of a vehicle 200.

In phase 201, the vehicle 200 may transmit a DK framework select to the UE 250. In phase 202, the vehicle 200 and the UE 250 may generate a secure channel. In phase 203, the vehicle 200 may transmit data required for generating a digital key to the UE 250. In phase 204, the UE 250 may generate a digital key in a secure element.

In phase 205, the UE 250 may transmit, to the vehicle 200, a certificate signed by the UE 250 and the vehicle 200. In phase 206, the vehicle 200 may verify data of a digital key certificate, extract a public key (PK) of the UE from the digital key certificate, and store a public key of the UE together with the access rights of a vehicle owner.

In phase 207, the vehicle 200 and the UE 250 may select a digital key framework. In addition, in phase 208, the vehicle 200 and the UE 250 may perform mutual authentication.

In FIG. 2, phases 201 to 206 are included in phase 2 of FIG. 1B, and phases 207 to 208 of FIG. 2 are included in phase 3 of FIG. 1B. When implementing the operation illustrated in FIG. 2 at the vehicle and the UE, phases 201 to 206, which are included in phase 2, may take about 11.557 seconds, and phases 207 to 208, which are included in phase 3, may take about 4.166 seconds.

As illustrated in FIG. 2, in case of performing owner pairing by using NFC, a long NFC tagging time may be required between the vehicle and the UE. That is, since the size of data exchanged between the vehicle and the UE during owner pairing is bulky, it is necessary to reduce the time and data size in owner pairing. Accordingly, the disclosure proposes a method for improving user convenience and shortening a pairing time by using Bluetooth communication in owner pairing using only NFC.

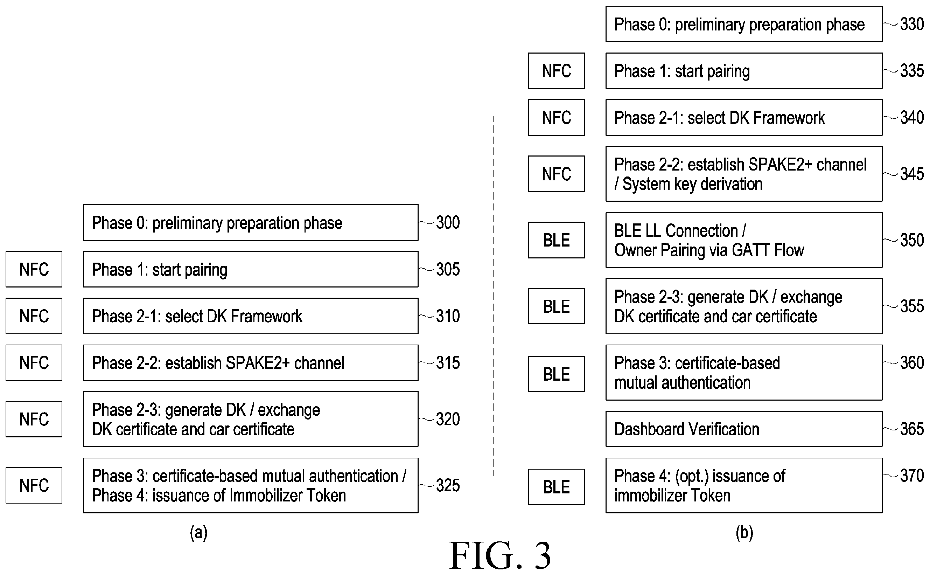

Case (a) of FIG. 3 is a flowchart illustrating a pairing procedure using only NFC.

Case (b) of FIG. 3 illustrates the same owner pairing procedure for registering a UE as a car key as illustrated in FIG. 1B, and provides a detailed view of phase 2.

Referring to FIG. 3, phase 0 is a preparation phase in which a UE may prepare a DK applet and store a UE certificate (300). Phase 1 is a pairing procedure initiation phase in which an owner pairing password issued by a vehicle manufacturer to a vehicle owner may be input to the UE (305).

Phase 2 is a first session through an NFC reader, in which after an owner pairing password is verified, the UE may generate a digital key and exchange a vehicle certificate and a digital key certificate. This will be described in detail in FIG. 3, and in phase 2-1, a vehicle may select a digital key frame (310). In addition, in phase 2-2, the vehicle and the UE may form a simplified password authenticated key exchange (SPAKE2+) channel (315). Simplified password authenticated key exchange (SPAKE2+) refers to a password authentication key exchange protocol executed between two parties, as previously described, and SPAKE2+ functions as a secure channel.

In phase 2-3, the vehicle and the UE may generate a digital key and exchange a digital key certificate and the vehicle's certificate (320). In phase 3, mutual authentication may be performed based on the certificates, and in phase 4, an immobilizer token required for performing an operation (action) such as "Engine start" may be issued (325).

Case (b) of FIG. 3 is a flowchart illustrating a pairing procedure sequentially using NFC and BLE according to an embodiment of the disclosure.

Phase 0 (330), phase 1 (335), phase 2-1 (340), and phase 4 (370) illustrated in case (b) of FIG. 3 are the same as phase 0 (300), phase 1 (305), phase 2-1 (310), and phase 4 (325) in case (a) of FIG. 3, and thus the description thereof is omitted. That is, an owner pairing procedure sequentially using NFC and BLE may start owner pairing by NFC triggering, but the owner pairing may be performed through BLE from phase 2-2 onwards. Accordingly, a user does not need to tag on the vehicle's pad (e.g., a wireless charging pad) in an owner pairing phase using BLE.

In phase 2-2, the vehicle and the UE may establish a SPAKE2+ channel and derive a system key (345). After phase 2-2, in order to initiate BLE communication, a BLE link layer (LL) connection may be established, and owner pairing may be performed through a BLE generic attribute (GATT) profile flow (350). In phase 2-3, a digital key may be generated using BLE communication, and a digital key certificate and a vehicle certificate may be exchanged (355). In phase 3, the vehicle and the UE may perform certificate-based mutual authentication (360), and perform dashboard verification (370).

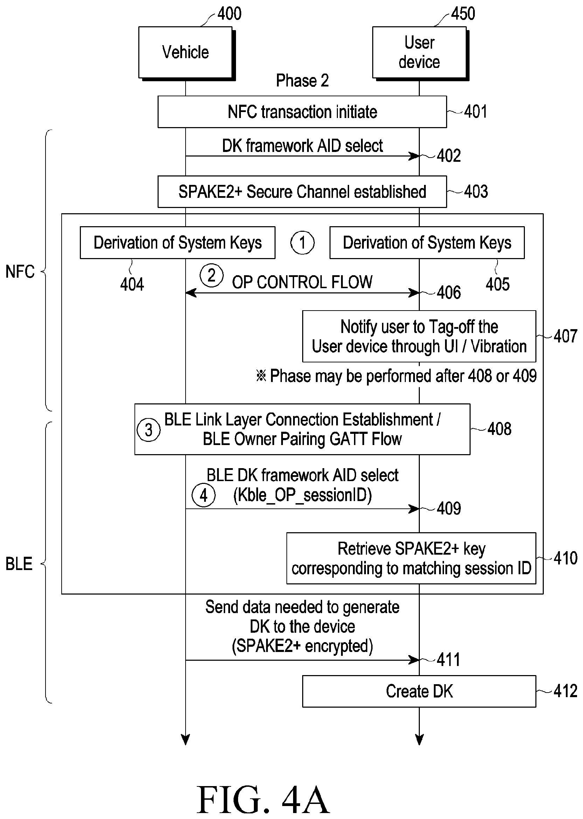

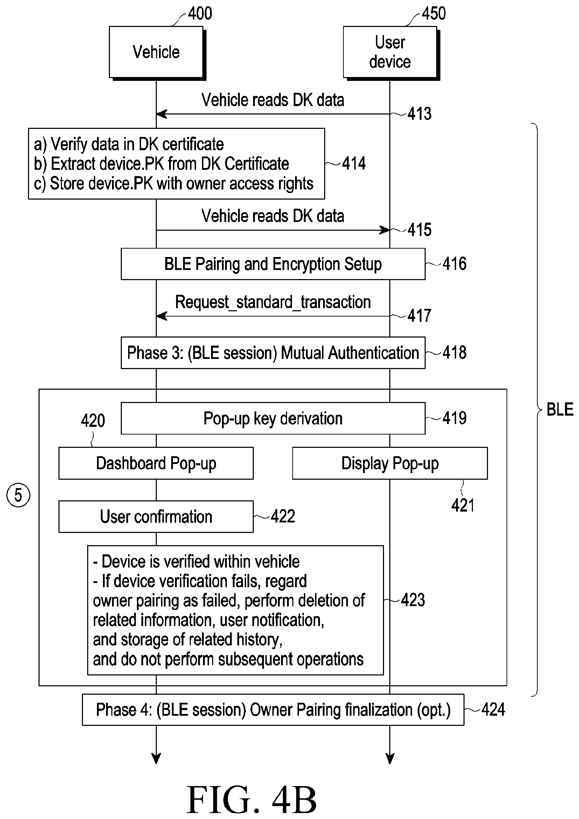

FIGS. 4A and 4B are flowcharts illustrating a pairing procedure sequentially using NFC and BLE according to an embodiment of the disclosure.

Specifically, FIGS. 4A and 4B are diagrams illustrating phases 2-2 (phase 2) (345) to phase 4 (370) described in case (b) of FIG. 3, and a UE 450 is an owner device of a vehicle 400.

In phase 401, the vehicle 400 and the UE 450 may initiate an NFC transaction.

In phase 402, the vehicle 400 may transmit a selection of a DK framework application identifier (AID) to the UE 450. In phase 403, the vehicle 400 and the UE 450 may establish a simplified password authenticated key exchange (SPAKE2+) channel. As previously described, simplified password authenticated key exchange (SPAKE2+) refers to a password authentication key exchange protocol executed between two parties, and SPAKE2+ functions as a secure channel.

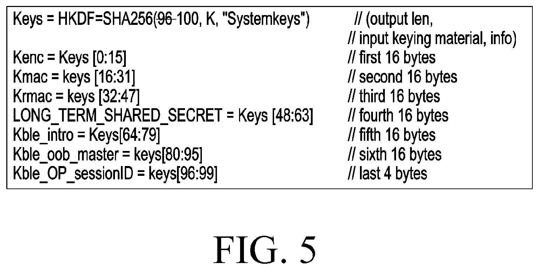

In phases 404 and 405, the vehicle 400 and the UE 450 may deviate each system key. A more detailed description thereof is provided below with reference to FIG. 5.

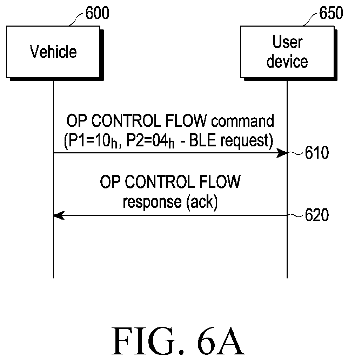

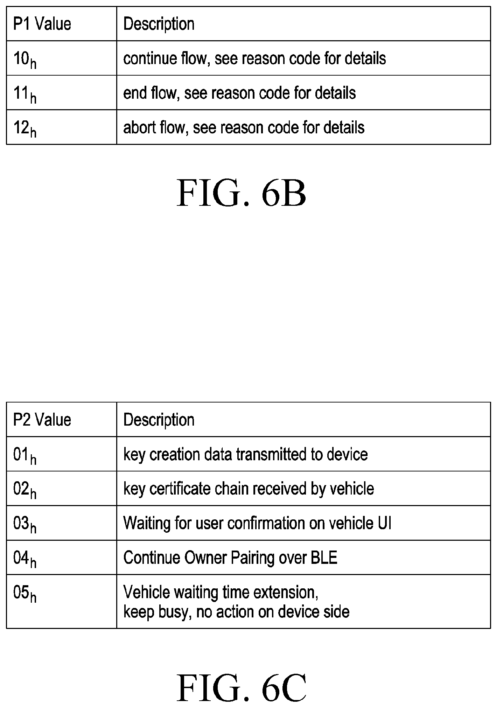

In phase 406, the vehicle 400 and the UE 450 may transmit and receive an owner pairing control flow. A more detailed description thereof is provided below with reference to FIG. 6.

In phase 407, the UE 450 may notify a user to tag off the UE, through a UI or a vibration of a device or the like. Phase 407 may be performed after phase 408 or 409.

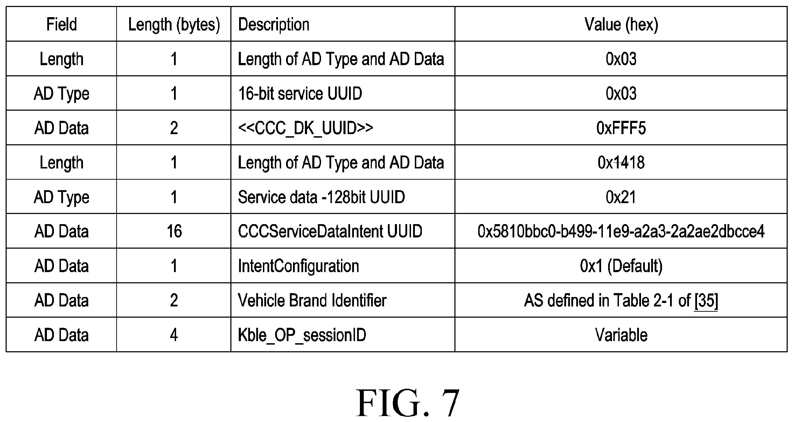

In phase 408, in order to initiate BLE communication, the vehicle 400 may establish a BLE link layer (LL) connection and perform owner pairing through a BLE generic attribute (GATT) profile flow (408). That is, a procedure for BLE communication may start from phase 408. A more detailed description thereof is provided below with reference to FIG. 7.

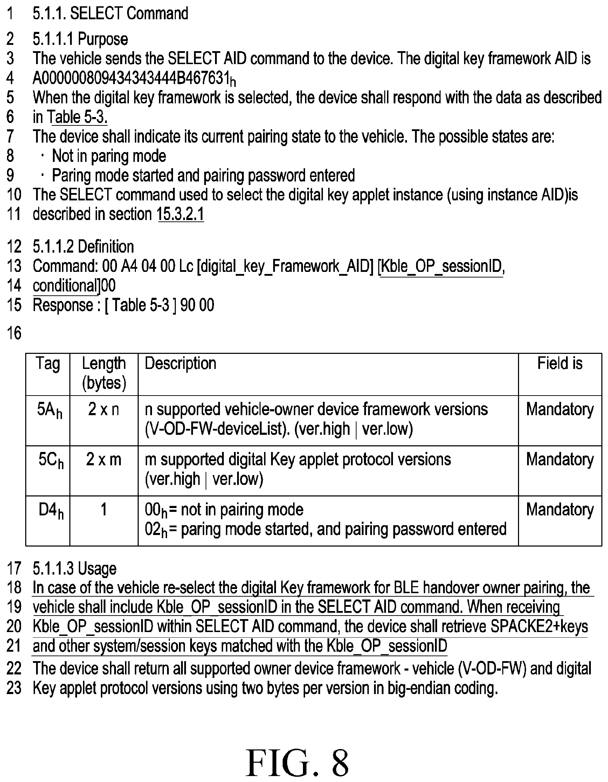

In phase 409, the vehicle 400 may select and transmit a BLE digital key framework application identifier (AID) to the UE 450. A more detailed description thereof is provided below with reference to FIG. 8.

In phase 410, the UE 450 may retrieve a SPAKE2+ key corresponding to a matching session ID. In phase 411, the vehicle 400 may transmit data required for generating a digital key to the UE 450. The data may be encrypted using SPAKE2+. In phase 412, the UE 450 may generate a digital key.

In phase 413, when the UE 450 transmits the generated digital key to the vehicle 400, the vehicle 400 may read the digital key.

In phase 414, the vehicle 400 may verify data of a digital key certificate, extract a public key (PK) of the UE from the digital key certificate, and store a public key of the UE together with the access rights of a vehicle owner.

In phase 415, the vehicle 400 may notify the UE 450 that BLE pairing is ready.

In phase 416, the vehicle 400 and the UE 450 may set up BLE pairing and encryption operations.

In phase 417, the UE 450 may request a standard transaction from the vehicle 400.

In phase 418, the vehicle 400 and the UE 450 may perform mutual authentication of phase 3 (360) in case (b) of FIG. 3.

Phases 419 to 423 relate to dashboard verification (365) after phase 3 (360) in case (b) of FIG. 3.

In phase 419, the vehicle 400 and the UE 450 may pop up key derivation. In phases 420 and 421, the vehicle 400 and the UE 450 may pop up information related to the digital key on a dashboard of the vehicle and a screen of the UE, respectively. In phase 422, the vehicle 400 may receive an input of a user identification through the dashboard.

In phase 423, the vehicle 400 may perform verification of the UE 450. If the verification of the UE fails, the owner pairing may be regarded as failed, and deletion of related information, user notification, storage of related history, and the like may be performed, and subsequent operations may not be performed.

In phase 424, the vehicle 400 and the UE 450 may perform an owner pairing termination device (in a BLE session). Phase 424 may be optionally included.

FIG. 5 is a diagram illustrating a system key derivation operation of a pairing procedure sequentially using NFC and BLE according to an embodiment of the disclosure.

More specifically, FIG. 5 illustrates the contents related to phases 404 and 405 of FIG. 4.

In phases 404 and 405 of FIG. 4, when each of the vehicle and the UE derives a system key, Kble_OP_sessionId may be additionally generated. The generated Kble_OP_sessionId may be included in an Owner Pairing Phase 2: SPAKE2+ Flow and Certificate Exchange part defined in Section 19.5.1 of the CCC specification. The Kble_OP_sessionId may later be added by the vehicle to a field of a BLE Adv packet, and may be added to a BLE DK framework AID select field.

FIGS. 6A, 6B, and 6C are diagrams illustrating an owner pairing procedure of a pairing procedure sequentially using NFC and BLE according to an embodiment of the disclosure.

FIGS. 6A, 6B, and 6C are diagrams specifically illustrating an owner pairing control flow related to phase 406 of FIG. 4. A vehicle 600 and a UE 650 of FIG. 6 may include the vehicle 400 and the UE 450 of FIG. 4.

In phase 610, the vehicle 600 may transmit an owner pairing control flow command to the UE 650. That is, the vehicle 600 may deliver, to the UE, an OP CONTROL FLOW command including information indicating that "Owner Pairing is to be performed through BLE." For example, referring to a table for a P1 parameter within OP_CONTROL_FLOW illustrated in FIG. 6B, the vehicle 600 may set P1 = 10h to indicate "continue flow." In addition, referring to a table for an OP_CONTORL_FLOW P2 parameter illustrated in FIG. 6C, the vehicle 600 may set P2 = 04h to indicate "continue Owner Paring over BLE."

In phase 620, the UE 650 may transmit an owner pairing control flow response (that is, acknowledge) to the vehicle 600.

FIG. 7 is a diagram illustrating a BLE advertising message when establishing a BLE connection in a pairing procedure sequentially using NFC and BLE according to an embodiment of the disclosure.

FIG. 7 relates to an operation of establishing a BLE link layer (LL) connection related to phase 408 of FIG. 4. When a vehicle performs a handover from NFC to BLE, the vehicle may include Kble_OP_sessionId in a BLE advertising message and transmit the BLE advertising message. In an embodiment, as illustrated in FIG. 7, the vehicle may include Kble_OP_sessionId having a length of 4 bytes in a data field (e.g., AdvData of ADV_IND) of a BLE advertising message transmitted to a car UE. If a UE has not performed a prior phase of owner pairing through NFC, the UE may ignore advertising including the Kble_OP_sessionId.

FIG. 8 is a diagram illustrating a select command transmitted by a vehicle to a UE when establishing a BLE connection in a pairing procedure sequentially using NFC and BLE according to an embodiment of the disclosure.

FIG. 8 relates to an operation in which a vehicle selects an AID of a BLE digital key framework for a UE in phase 409 of FIG. 4. When a vehicle selects a digital key framework through BLE, the vehicle may add Kble_OP_sessionId to a SELECT command transmitted to the UE, thereby clearly indicating that the selection is for a subsequent phase associated with a specific session of NFC owner pairing that is currently in progress.

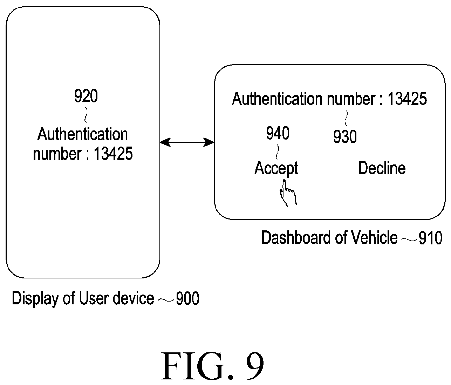

FIG. 9 is a diagram illustrating a verification procedure for each user in a pairing procedure sequentially using NFC and BLE according to an embodiment of the disclosure.

FIG. 9 relates to a procedure in which a vehicle and a UE verify a user through a dashboard and a display in phases 419 to 423 of FIG. 4.

That is, in FIG. 4, previously, only a session ID for BLE is transmitted and received through NFC, and a main owner pairing procedure is performed through BLE. Therefore, a procedure for identifying whether the UE is a UE of an owner inside a vehicle is required. Accordingly, whether the vehicle and the UE have the same authentication number (pop-up key) may be identified, and a user (owner) may identify the same through a dashboard of the vehicle.

The vehicle and the UE may secure the same pop-up key. In an embodiment, the vehicle (or the UE) may generate a pop-up key, and then transmit the pop-up key to the UE (or the vehicle). In another embodiment, in phases 404 and 405 of FIG. 4, when the vehicle and the UE generate a system key such as a SPAKE2+, the vehicle and the UE may additionally generate respective pop-up keys. In another embodiment, when the vehicle and the UE perform mutual authentication through a certificate in phase 418 of FIG. 4, the vehicle and the UE may additionally generate respective pop-up keys.

Thereafter, the pop-up key may be displayed on a screen 900 of the UE (920), and the pop-up key may be displayed on a dashboard 910 of the vehicle (930). When authentication numbers displayed on the two devices are the same, the user may tap an accept (or continue) button 940 on the dashboard 910 of the vehicle, and in this case, a verification procedure through the pop-up keys of the vehicle and the UE may be completed.

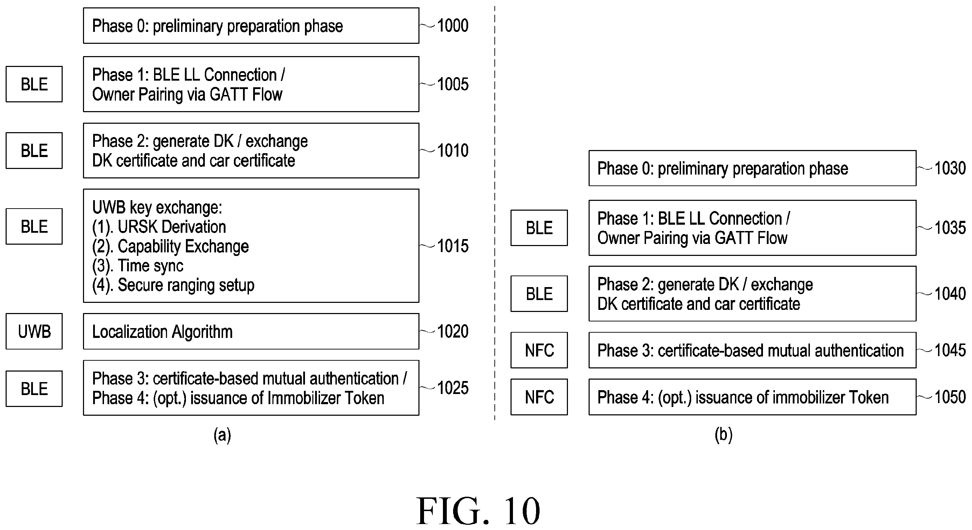

Case (a) of FIG. 10 is a flowchart illustrating a pairing procedure using BLE and UWB.

Referring to case (a) of FIG. 10, phase 0 is a preparation phase in which a UE may prepare a digital key applet and store a UE certificate (1000). Phase 1 is a pairing procedure initiation phase in which a BLE link layer (LL) connection may be established, and owner pairing may be performed through a BLE generic attribute (GATT) profile flow (1005).

In phase 2, the UE may generate a digital key and mutually exchange a vehicle certificate and a digital key certificate (1010).

Thereafter, a vehicle and the UE may perform a UWB key exchange operation for UWB communication for precise positioning (1015). That is, the vehicle and the UE may perform UWB ranging secret key (URSK) derivation, capability exchange, time synchronization (Time sync), and secure ranging setup operations. Thereafter, the vehicle may detect whether the UE is located inside the vehicle by using a localization algorithm through a UWB ranging operation in UWB communication (1020).

In phase 3, mutual authentication may be performed based on the certificates, and in phase 4, an immobilizer token may be issued (1025). The phase 4 may be optionally included.

Case (b) of FIG. 10 is a flowchart illustrating a pairing procedure sequentially using BLE and NFC according to an embodiment of the disclosure.

Unlike case (a) of FIG. 10, in case (b) of FIG. 10, phase 3 and phase 4 may be performed by using NFC rather than UWB communication. That is, before phase 3 in which certificate verification for mutual authentication between a vehicle and a UE is performed, the presence of the UE inside the vehicle may be identified, and user authentication using NFC may be performed to prevent a man-in-the-middle (MITM) attack.

Referring to case (b) of FIG. 10, phase 0 is a preparation phase in which a UE may prepare a DK applet and store a UE certificate (1030). Phase 1 is a pairing procedure initiation phase in which a BLE link layer (LL) connection may be established, and owner pairing may be performed through a BLE generic attribute (GATT) profile flow (1035).

In phase 2, the UE may generate a digital key and mutually exchange a vehicle certificate and a digital key certificate (1040).

In phase 3, the vehicle and the UE may perform mutual authentication based on the certificates by using NFC communication (1045), and in phase 4, an immobilizer token may be issued (1050). The phase 4 may be optionally included.

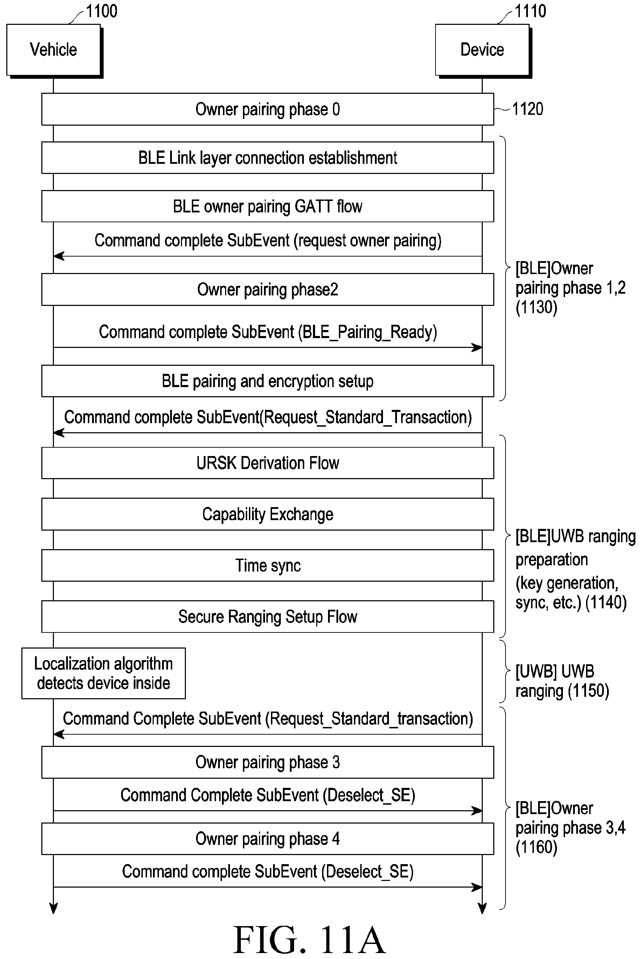

FIG. 11A is a flowchart illustrating a pairing procedure using BLE and UWB.

FIG. 11A is a diagram specifically illustrating the operations of FIG. 10A. Phase 1120 corresponds to phase 0 of FIG. 10A, and phase 1130 corresponds to the operations of phase 1 and phase 2 of FIG. 10A, and illustrates an operation in BLE communication. Phase 1140 corresponds to an operation of preparing UWB ranging in BLE communication, and corresponds to the UWB key exchange 1020 of FIG. 10A. Phase 1150 illustrates performing a UWB ranging operation in UWB communication, and phase 1160 corresponds to operations for phase 3 and phase 4 of FIG. 10A.

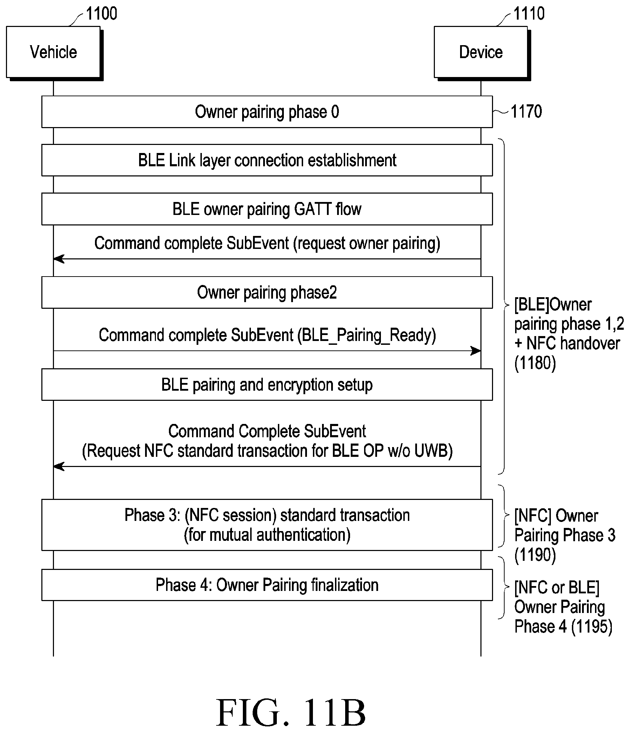

FIG. 11B is a flowchart illustrating a pairing procedure sequentially using BLE and NFC according to an embodiment of the disclosure.

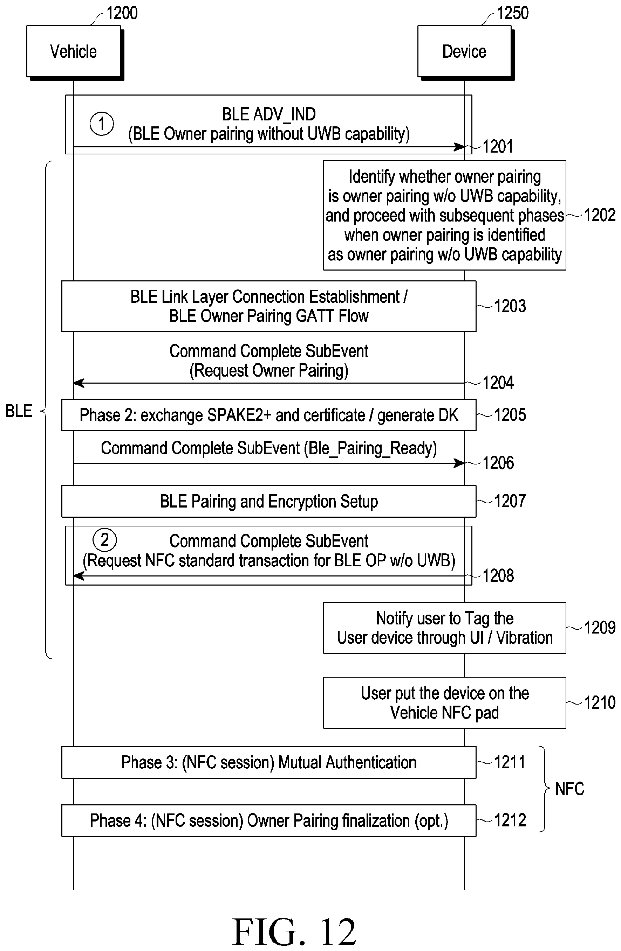

FIG. 11B is a diagram related to the operations of FIG. 10B. Phase 1170 corresponds to phase 0 of FIG. 10B, and phase 1180 corresponds to the operations of phase 1 and phase 2 of FIG. 10B, and corresponds to operations related to owner pairing and a handover to NFC. Phase 1190 is related to phase 3 of FIG. 10B, and corresponds to an operation of performing owner pairing in NFC communication. Phase 1195 corresponds to the operation for phase 4 of FIG. 10B. An operation included in each phase is described in detail with reference to FIG. 12.

FIG. 12 is a flowchart illustrating a pairing procedure sequentially using BLE and NFC according to an embodiment of the disclosure.

FIG. 12 is a diagram specifically illustrating a pairing procedure sequentially using BLE and NFC shown in FIG. 11B. A vehicle 1200 and a UE 1250 of FIG. 12 may be, for example, the vehicle 1100 and the UE 1110 of FIG. 11B.

Phase 1201 is included in phase 1180 of FIG. 11B, and in phase 1201, the vehicle 1200 may transmit a BLE advertising message (e.g., BLE ADV_IND) to the UE 1250. The vehicle 1200 may transmit, to the UE 1250, a BLE advertising message including information indicating BLE owner pairing without UWB capability.

In phase 1202, the UE 1250 may identify whether the owner pairing is owner pairing without accompanied UWB capability, and may proceed with subsequent phases when the owner pairing is identified as owner pairing without accompanied UWB capability.

In phase 1203, the vehicle 1200 and the UE 1250 may establish a BLE link layer (LL) connection and perform owner pairing through a BLE generic attribute (GATT) profile flow.

In phase 1204, the UE 1250 may transmit a Command Complete Subevent to the vehicle 1200. In this case, the UE 1250 may request owner pairing from the vehicle 1200. In phase 1205, the UE 1250 may establish a SPAKE2+ channel, mutually exchange a vehicle certificate and a digital key certificate, and generate a digital key. In phase 1206, the vehicle 1200 may transmit a Command Complete Subevent to the UE 1250. In this case, the vehicle 1200 may notify the UE 1250 of BLE_Pairng_Ready. In phase 1207, the vehicle 1200 and the UE 1250 may set up BLE pairing and encryption operations.

In phase 1208, the UE 1250 may transmit a Command Complete Subevent to the vehicle 1200. In this case, the UE 1250 may request, from the vehicle 1200, an NFC standard transaction for BLE owner pairing without accompanied UWB capability.

In phase 1209, the UE 1250 may notify a user to tag the UE, through a UI, a vibration of a device, or the like. In phase 1210, the UE 1250 may be placed on an NFC pad of the vehicle by the user.

In phase 1211, the vehicle 1200 and the UE 1250 may perform mutual authentication based on the certificates by using NFC communication, and in phase 1212, an immobilizer token may be issued. The phase 1212 may be optionally included.

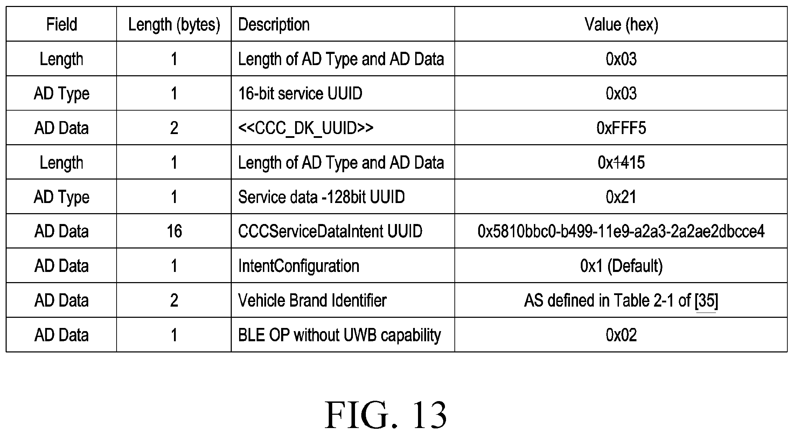

FIG. 13 is a diagram illustrating BLE advertisement data in a pairing procedure sequentially using BLE and NFC according to an embodiment of the disclosure.

More specifically, FIG. 13 illustrates the contents related to phase 1201 of FIG. 12.

As illustrated in FIG. 12, a vehicle supporting BLE + NFC owner pairing may add information indicating that "BLE owner pairing using NFC is supported even without UWB" to an advertisement for owner pairing, and transmit the advertisement. In an embodiment, as illustrated in FIG. 13, the vehicle may include BLE OP without UWB support having a length of 1 byte in a data field (e.g., AdvData of ADV_IND) of a BLE advertising message transmitted to a car UE. In an embodiment, a UE not equipped with UWB may receive a BLE advertisement and proceed with subsequent phases such as a BLE connection request only when BLE+NFC owner pairing is supported.

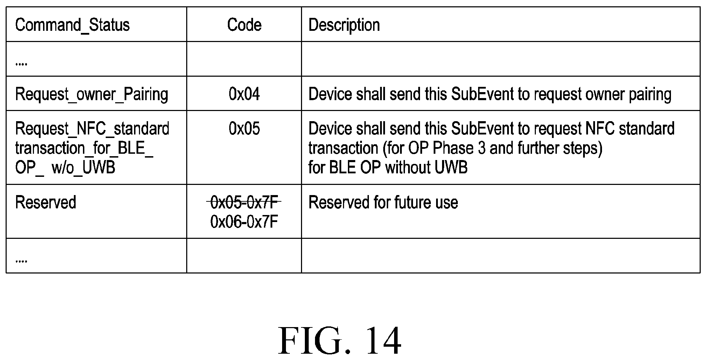

FIG. 14 is a diagram illustrating a message transmitted by a UE in a pairing procedure sequentially using BLE and NFC according to an embodiment of the disclosure.

More specifically, FIG. 14 illustrates the contents related to phase 1208 of FIG. 12.

When BLE+NFC owner pairing is performed as illustrated in FIG. 12,
after establishing a SPAKE2+ channel and mutually exchanging a vehicle certificate and a digital key certificate in phase 1205 of FIG. 12, the UE may request the vehicle to proceed with an NFC verification phase in order to perform a subsequent verification procedure using NFC.

FIG. 14 illustrates a list of command_status within a command complete subevent message. In an embodiment, a UE may transmit a command_status indicating Request_NFC_standard transaction_for_BLE_OP_w/o_UWB. Accordingly, by using Request_NFC _standard_transaction _for_BLE _OP_w/o_UWB, the UE may request an NFC standard transaction in phase 3 and subsequent phases of owner pairing for BLE owner pairing without UWB.

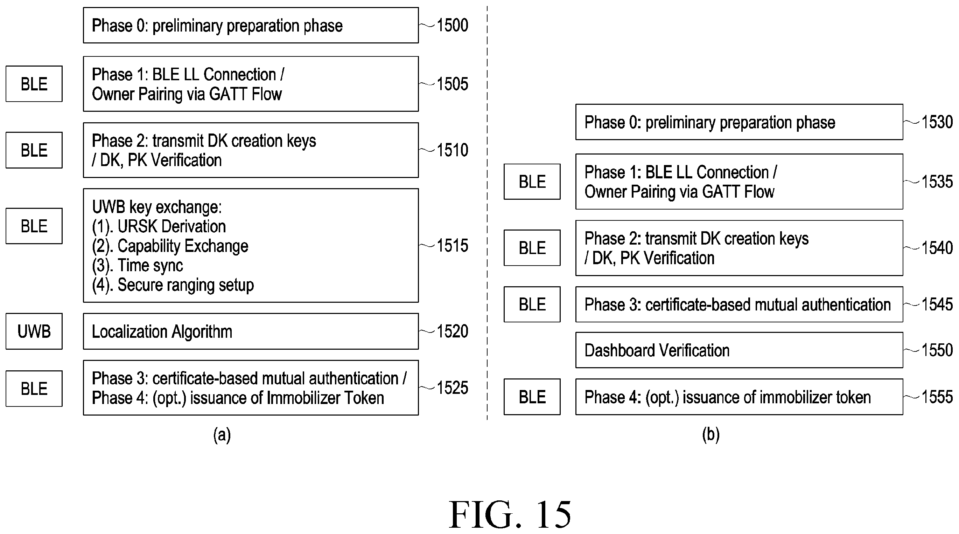

Case (a) of FIG. 15 is a flowchart illustrating a pairing procedure using BLE and UWB.

Referring to case (a) of FIG. 15, phase 0 is a preparation phase in which a UE may prepare a DK applet and store a UE certificate (1500). Phase 1 is a pairing procedure initiation phase in which a BLE link layer (LL) connection may be established, and owner pairing may be performed through a BLE generic attribute (GATT) profile flow (1505).

In phase 2, the UE may generate a digital key (DK), transmit the key, and verify the digital key (DK) and a public key (PK) (1510).

Thereafter, a vehicle and the UE may perform a UWB key exchange operation for UWB communication for precise positioning (1515). That is, the vehicle and the UE may perform UWB ranging secret key (URSK) derivation, capability exchange, time synchronization (Time sync), and secure ranging setup operations. Thereafter, the vehicle may detect whether the UE is located inside the vehicle by using a localization algorithm through a UWB ranging operation in UWB communication (1520).

In phase 3, mutual authentication may be performed based on a certificate, and in phase 4, an immobilizer token may be issued (1525). The phase 4 may be optionally included.

Case (b) of FIG. 15 is a flowchart illustrating a pairing procedure using only BLE according to an embodiment of the disclosure.

Unlike case (a) of FIG. 15, in case (b) of FIG. 15, an owner pairing procedure may be performed using only BLE communication without using UWB communication. In an embodiment, after phase 3 in which certificate verification for mutual authentication between a vehicle and a UE is performed, the presence of the UE inside the vehicle may be identified, and user authentication using verification on a dashboard of the vehicle may be performed to prevent a man-in-the-middle (MITM) attack.

Referring to case (b) of FIG. 15, phase 0 is a preparation phase in which a UE may prepare a digital key applet and store a UE certificate (1530). Phase 1 is a pairing procedure initiation phase in which a BLE link layer (LL) connection may be established, and owner pairing may be performed through a BLE generic attribute (GATT) profile flow (1535).

In phase 2, the UE may generate a digital key and mutually exchange a vehicle certificate and a digital key certificate (1540).

In phase 3, the vehicle and the UE may perform mutual authentication based on the certificates by using NFC communication (1545), and the vehicle and the UE may perform dashboard verification (1550). In phase 4, an immobilizer token may be issued (1550). The phase 4 may be optionally included.

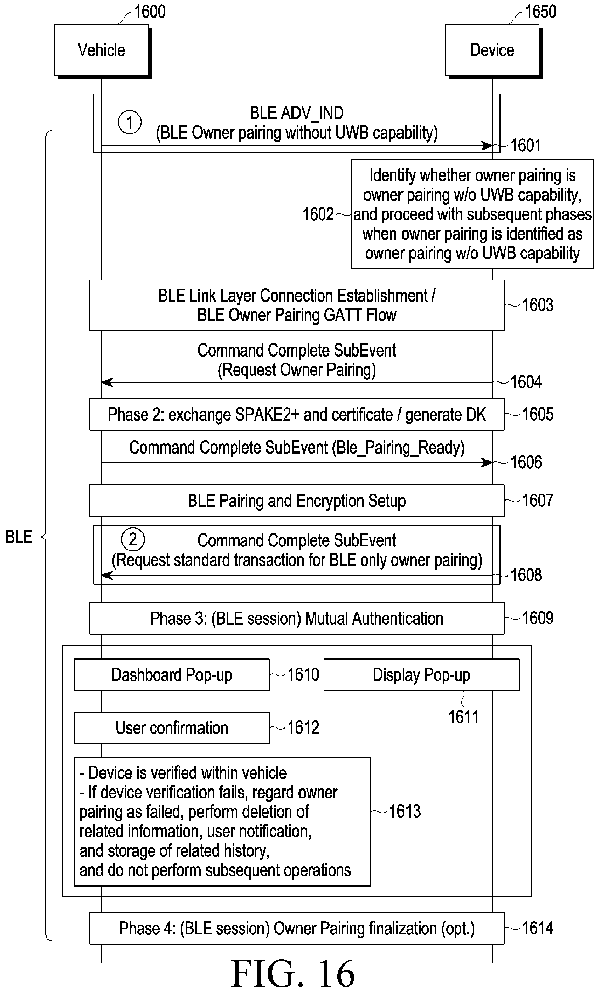

FIG. 16 is a flowchart illustrating a pairing procedure using only BLE according to an embodiment of the disclosure.

FIG. 16 is a diagram specifically illustrating a pairing procedure only using BLE shown in FIG. 15B.

In phase 1601, a vehicle 1600 may transmit a BLE advertising message (e.g., BLE ADV_IND) to a UE 1650. The vehicle 1600 may transmit, to the UE 1650, a BLE advertising message including information indicating BLE owner pairing without UWB capability.

In phase 1602, the UE 1650 may identify whether the owner pairing is owner pairing without accompanied UWB capability, and may proceed with subsequent phases when the owner pairing is identified as owner pairing without accompanied UWB capability.

In phase 1603, the vehicle 1600 and the UE 1650 may establish a BLE link layer (LL) connection and perform owner pairing through a BLE generic attribute (GATT) profile flow.

In phase 1604, the UE 1650 may transmit a Command Complete Subevent to the vehicle 1600. In this case, the UE 1650 may request owner pairing from the vehicle 1600. In phase 1605, the UE 1650 may establish a SPAKE2+ channel, mutually exchange a vehicle certificate and a digital key certificate, and generate a digital key. In phase 1606, the vehicle 1600 may transmit a Command Complete Subevent to the UE 1650. In this case, the vehicle 1600 may notify the UE 1650 of BLE_Pairng_Ready. In phase 1607, the vehicle 1600 and the UE 1650 may set up BLE pairing and encryption operations.

In phase 1608, the UE 1650 may transmit a Command Complete Subevent to the vehicle 1600. In this case, the UE 1650 may request, from the vehicle 1600, a standard transaction for BLE owner pairing without UWB capability.

In phase 1609, the vehicle 1600 and the UE 1650 may perform mutual authentication by using a BLE session. In phases 1610 and 1611, the vehicle 1600 and the UE 1650 may pop up information related to the digital key on a dashboard of the vehicle 1600 and a screen of the UE 1650, respectively. In phase 1612, the vehicle 1600 may receive an input of a user identification through the dashboard.

In phase 1613, the vehicle 1600 may perform verification of the UE 1650. If the verification of the UE fails, the owner pairing may be regarded as failed, and deletion of related information, user notification, storage of related history, and the like may be performed, and subsequent operations may not be performed.

In phase 1614, the vehicle 1600 and the UE 1650 may issue an immobilizer token. The phase 1614 may be optionally included.

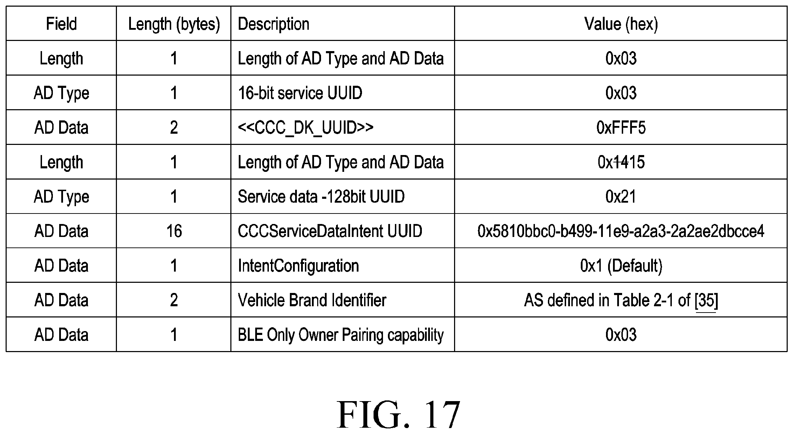

FIG. 17 is a diagram illustrating BLE advertisement data in a pairing procedure using only BLE according to an embodiment of the disclosure.

More specifically, FIG. 17 illustrates the contents related to phase 1601 of FIG. 16.

As illustrated in FIG. 16, a vehicle supporting BLE only owner pairing may add information indicating that "BLE only owner pairing using BLE is supported even without UWB" to an advertisement for owner pairing, and transmit the advertisement. In an embodiment, as illustrated in FIG. 17, the vehicle may include BLE only owner pairing capability having a length of 1 byte in a data field (e.g., AdvData of ADV_IND) of a BLE advertising message transmitted to a car UE. In an embodiment, a UE not equipped with UWB may receive a BLE advertisement and proceed with subsequent phases such as a BLE connection request only when the BLE only owner pairing is supported.

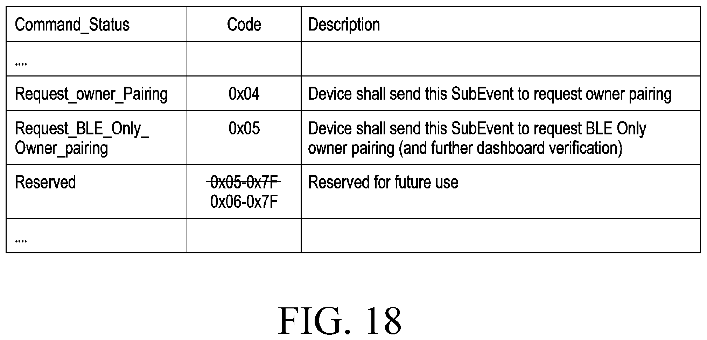

FIG. 18 is a diagram illustrating a message transmitted by a UE in a pairing procedure sequentially using BLE and NFC according to an embodiment of the disclosure.

More specifically, FIG. 18 illustrates the contents related to phase 1608 of FIG. 16.

As illustrated in FIG. 16, in the case of performing BLE only owner pairing, after establishing the SPAKE2+ channel and mutually exchanging the vehicle certificate and the digital key certificate in phase 1605 of FIG. 16, the UE 1650 may transmit, to the vehicle 1600, a signal for proceeding with BLE owner pairing.

FIG. 18 illustrates a list of command_status values in a command complete subevent message. In an embodiment, the UE 1650 may transmit a command_status indicating Request_BLE_Only_Owner_pairing. Accordingly, the UE may request BLE only owner pairing without UWB by using Request_BLE_Only_Owner_Pairing. In addition, the UE 1650 may additionally request dashboard verification.

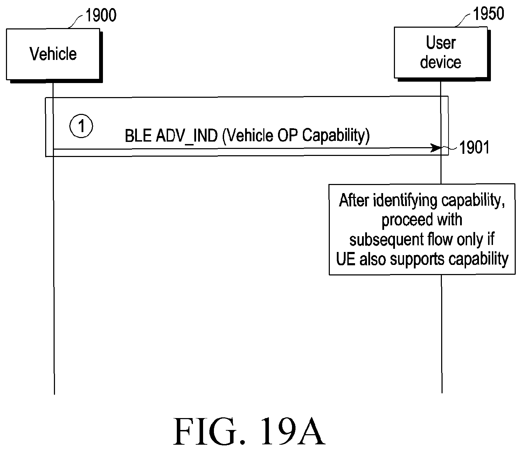

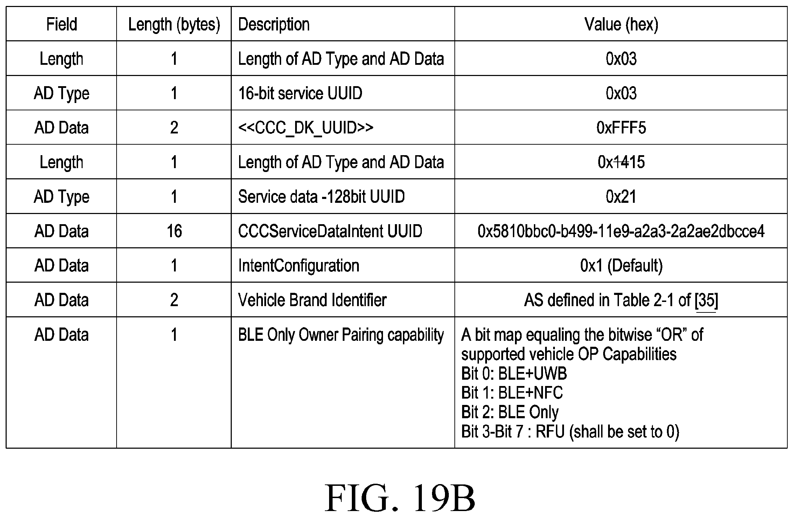

FIGS. 19A and 19B are diagrams illustrating information on a pairing capability of a car according to an embodiment of the disclosure.

FIG. 19A shows that, in consideration of a case in which a vehicle 1900 supports both owner pairing using only BLE and BLE+NFC owner pairing, the vehicle 1900 may include vehicle owner pairing (OP) capability information in a BLE advertisement message.

In phase 1901, the vehicle 1900 may transmit a BLE advertising message (e.g., BLE ADV_IND) to a UE 1950. The BLE advertising message may include vehicle owner pairing (OP) capability information.

In phase 1902, after identifying the vehicle owner pairing capability, the UE 1950 may proceed with subsequent procedures only when the UE also supports a capability.

FIG. 19B illustrates contents related to phase 1901 of FIG. 19A. In an embodiment, as illustrated in FIG. 19B, a vehicle may include vehicle OP capability having a length of 1 byte in a data field of a BLE advertising message (e.g., AdvData of an ADV_IND) transmitted to a car UE. In an embodiment, the vehicle OP capability may represent a bitmap identical to a bit-wise "OR" of supported vehicle owner pairing functions.

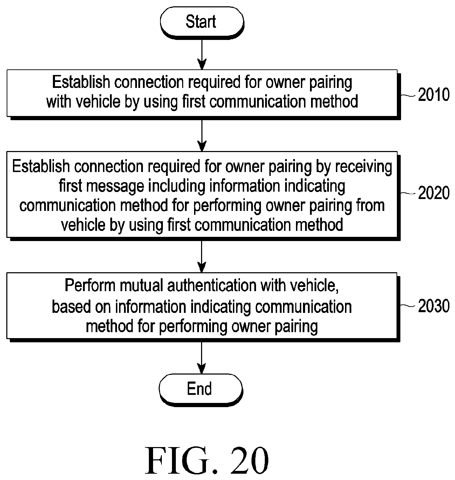

FIG. 20 is a flowchart illustrating an operation method of a UE according to an embodiment of the disclosure.

A UE of FIG. 20 is an owner device of a vehicle and performs owner pairing with the vehicle. In an embodiment, in phase 2010, the UE which performs owner pairing with the vehicle in a wireless communication system may establish a connection required for owner pairing with the vehicle by using a first communication method. In phase 2020, the UE may receive a first message including information indicating a communication method for performing owner pairing from the vehicle by using the first communication method. In phase 2030, the UE may perform mutual authentication with the vehicle, based on the information indicating the communication method for performing the owner pairing.

In an embodiment, when the information indicating the communication method for performing the owner pairing indicates a second communication method, the UE may receive a session identifier of the second communication method from the vehicle. In an embodiment, when the information indicating the communication method for performing the owner pairing indicates the second communication method, the UE may transmit, to the vehicle, a second message requesting an authentication procedure using the second communication method.

In an embodiment, the UE may display a pop-up number related to the vehicle on a display. In an embodiment, when the first communication method is Bluetooth and the information indicating the communication method for performing the owner pairing indicates use of only the first communication method, the UE may display the pop-up number related to the vehicle on the display.

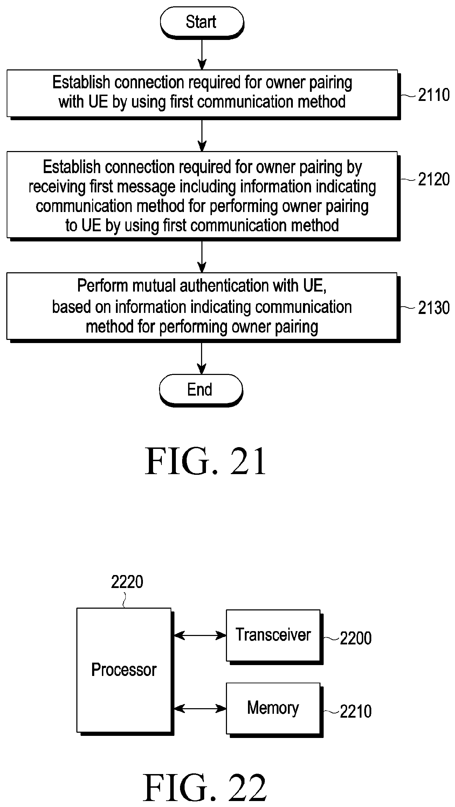

FIG. 21 is a flowchart illustrating an operation method of a vehicle according to an embodiment of the disclosure.

A vehicle of FIG. 21 performs owner pairing with a UE which is an owner device. In an embodiment, in phase 2110, the vehicle which performs owner pairing with the UE in a wireless communication system may establish a connection required for owner pairing with the UE by using a first communication method. In phase 2120, the vehicle may transmit a first message including information indicating a communication method for performing owner pairing to the UE by using the first communication method. In phase 2130, the vehicle may perform mutual authentication with the UE, based on the information indicating the communication method for performing the owner pairing.

In an embodiment, when the information indicating the communication method for performing the owner pairing indicates a second communication method, the vehicle may transmit a session identifier of the second communication method to the UE. In an embodiment, when the information indicating the communication method for performing the owner pairing indicates the second communication method, the vehicle may receive, from the UE, a second message requesting an authentication procedure using the second communication method.

In an embodiment, the vehicle may display a pop-up number related to the UE on a display. In an embodiment, when the first communication method is Bluetooth and the information indicating the communication method for performing the owner pairing indicates use of only the first communication method, the vehicle may display the pop-up number related to the UE on the display.

FIG. 22 is a structural diagram illustrating a structure of an electronic device according to an embodiment of the disclosure.

An electronic device of FIG. 22 may include the electronic device or vehicle of the disclosure.

The electronic device according to an embodiment of the disclosure may include a processor 2220 which controls the overall operation of the electronic device, a transceiver 2200 which includes a transmitter and a receiver, and memory 2210. Of course, the example given above is not limiting, and the electronic device may include a smaller or larger number of components than the components illustrated in FIG. 22.

According to an embodiment of the disclosure, the transceiver 2200 may transmit/receive signals with network entities or other electronic devices (e.g., terminals or vehicles). The signals transmitted/received with the electronic device may include control information and data. In addition, the transceiver 2200 may receive signals through a radio channel, output the same to the processor 2220, and transmit signals output from the processor 2220 through the radio channel.

According to an embodiment of the disclosure, the processor 2220 may control the electronic device to perform the operation according to any one of the above-described embodiments. Of course, the processor 2220, the memory 2210, and the transceiver 2200 are not necessarily implemented as separate modules, but may be implemented as a single component unit such as a single chip. Also, the processor 2220 and the transceiver 2200 may be electrically connected to each other. In addition, the processor 2220 may be an application processor (AP), a communication processor (CP), a circuit, an application-specific circuit, or at least one processor.

According to an embodiment of the disclosure, the memory 2210 may store basic programs, application programs, and data, such as configuration information, for the operation of the electronic device. In particular, the memory 2210 provides the stored data at the request of the processor 2220. The memory 2210 may include storage media such as a ROM, a RAM, a hard disk, a CD-ROM, and a DVD, or a combination of storage media. In addition, the memory 2210 may include multiple memories. Furthermore, the processor 2220 may perform the above-described embodiments of the disclosure, based on the programs for performing the embodiments, stored in the memory 2210.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. An operation method of a terminal for performing owner pairing with a vehicle in a wireless communication system, the operation method comprising:
establishing a connection required for owner pairing with the vehicle by using a first communication method;
receiving, from the vehicle, a first message including information indicating a communication method for performing owner pairing, by using the first communication method; and
performing mutual authentication with the vehicle, based on the information indicating the communication method for performing the owner pairing.

2. The method of claim 1, further comprising:
in case that the information indicating the communication method for performing the owner pairing indicates a second communication method, receiving, from the vehicle, a session identifier of the second communication method.

3. The method of claim 1, further comprising:
in case that the information indicating the communication method for performing the owner pairing indicates a second communication method, transmitting, to the vehicle, a second message requesting an authentication procedure using the second communication method.

4. The method of claim 1,
wherein the first communication method is Bluetooth, and
wherein the method further comprises, in case that the information indicating the communication method for performing the owner pairing indicates use of only the first communication method, displaying a pop-up number related to the vehicle on a display.

5. An operation method of a vehicle for performing owner pairing with a terminal in a wireless communication system, the operation method comprising:
establishing a connection required for owner pairing with the terminal by using a first communication method;
transmitting, to the terminal, a first message including information indicating a communication method for performing owner pairing, by using the first communication method; and
performing mutual authentication with the terminal, based on the information indicating the communication method for performing the owner pairing.

6. The method of claim 5, further comprising:
in case that the information indicating the communication method for performing the owner pairing indicates a second communication method, transmitting, to the terminal, a session identifier of the second communication method.

7. The method of claim 5, further comprising:
in case that the information indicating the communication method for performing the owner pairing indicates a second communication method, receiving, from the terminal, a second message requesting an authentication procedure using the second communication method.

8. The method of claim 5,
wherein the first communication method is Bluetooth, and
wherein the method further comprises, in case that the information indicating the communication method for performing the owner pairing indicates use of only the first communication method, displaying a pop-up number related to the terminal on a display.

9. A terminal for performing owner pairing with a vehicle in a wireless communication system, the terminal comprising:
a transceiver; and
at least one processor,
wherein the at least one processor is configured to:
establish a connection required for owner pairing with the vehicle by using a first communication method;
receive, from the vehicle, a first message including information indicating a communication method for performing owner pairing, by using the first communication method; and
perform mutual authentication with the vehicle, based on the information indicating the communication method for performing the owner pairing.

10. The terminal of claim 9,
wherein the at least one processor is further configured to, in case that the information indicating the communication method for performing the owner pairing indicates a second communication method, receive, from the vehicle, a session identifier of the second communication method.

11. The terminal of claim 9, wherein the at least one processor is further configured to, in case that the information indicating the communication method for performing the owner pairing indicates a second communication method, transmit, to the vehicle, a second message requesting an authentication procedure using the second communication method.

12. The terminal of claim 9,
wherein the first communication method is Bluetooth, and
wherein the at least one processor is further configured to, in case that the information indicating the communication method for performing the owner pairing indicates use of only the first communication method, display a pop-up number related to the vehicle on a display.

13. A vehicle for performing owner pairing with a terminal in a wireless communication system, the vehicle comprising:
a transceiver; and
at least one processor,
wherein the at least one processor is configured to:
establish a connection required for owner pairing with the terminal by using a first communication method;
transmit, to the terminal, a first message including information indicating a communication method for performing owner pairing, by using the first communication method; and
perform mutual authentication with the terminal, based on the information indicating the communication method for performing the owner pairing.

14. The vehicle of claim 13, wherein the at least one processor is further configured to:
in case that the information indicating the communication method for performing the owner pairing indicates a second communication method, transmit, to the terminal, a session identifier of the second communication method; and
receive, from the terminal, a second message requesting an authentication procedure using the second communication method.

15. The vehicle of claim 13,
wherein the first communication method is Bluetooth, and
wherein the at least one processor is configured to, in case that the information indicating the communication method for performing the owner pairing indicates use of only the first communication method, display a pop-up number related to the terminal on a display.
